# EUROPEAN PATENT APPLICATION

(11) **EP 1 441 275 A1**
(43) Date of publication of application: **28.07.2004**
(21) Application number: 03290141.5
(22) Date of filing: 21.01.2003
(51) Int. Cl.: G06F 1/00

(54) **Component for a computer**

(71) Applicant: Hewlett-Packard Company, Palo Alto, CA 94304 (US)
(72) Inventor: Piel, Vincent, 38100 Grenoble (FR)
(74) Representative: Lloyd, Richard Graham

(57) **Abstract**

A component, such as a motherboard or storage device, for a computer, the component comprising a firmware element operable to perform a security check to verify that the computer is connected to an authorised network, the security check comprising the steps of: generating a network enquiry, transmitting the network enquiry to a network device via a network, and permitting operation of at least a subsystem of the computer if a response to the network enquiry is received from the network device confirming that the network is an authorised network.

## Description

### Field of the Invention

This invention relates generally to the security of computer systems and, more particularly, to the prevention or deterrence of the theft of computers and computer components.

### Background of the Invention

Personal computers are a desirable and affordable commodity, and consequently are vulnerable to theft. This is particularly a problem for companies and other large organisations which own or manage a large number of personal computers, since the unauthorised removal of a personal computer belonging to that company, for example, for its theft, may often not be specifically identified. Even where the loss of a computer is identified, the computer itself may not be recovered.

Various solutions have been tried and proposed to resolve this problem. It is, for example known to provide a physical anchorage for a computer, making it difficult to physically move the computer from a location, for example by attaching it to a desk with a wire cable. In addition to such a solution, or where such a solution is inappropriate, particularly in the case of laptops, a number of software packages are available such as CompuTrace(TM) or Lucira MobileSecure (TM). With these approaches, when the laptop is connected to the Internet, a hidden and compact software agent transmits a message to a computer system, attached to the Internet and owned by the package provider, identifying the computer, for example by sending a serial number. If a computer is stolen, its owner notifies the service provider. Such a system is described for instance in US Patent 6,300,863.

An aim of the present invention is to provide a new or improved deterrent to the theft of computers and computer systems.

### Summary of the Invention

According to a first aspect of the invention, we provide a component for a computer, the component comprising a firmware element operable to perform a security check to verify that the computer is connected to an authorised network, the security check comprising the steps of: generating a network enquiry, transmitting the network enquiry to a network device via a network, and permitting operation of at least a subsystem of the computer if a response to the network enquiry is received from the network device confirming that the network is an authorised network.

In at least preferred embodiments, the network enquiry is encrypted using a key associated with the network, and wherein the response comprises an indication that the network enquiry has been correctly decrypted. The key can suitably be the public key of a public/private key pair associated with the network.

The firmware element can to perform a security check as part of a boot process.

The invention further provides a computer comprising a component as described above and a network comprising a plurality of such computers and a network device operable to receive a network enquiry from each computer, generate a response accordingly and transmit the response to the computer.

In another aspect the invention provides a method of booting a computer comprising a firmware element performing a security check to verify that the computer is connected to an authorised network, the security check comprising the steps of: generating a network enquiry, transmitting the network enquiry to a network device via a network, and permitting operation of at least a subsystem of the computer if a response to the network enquiry is received from the network device confirming that the network is an authorised network.

Thus the operation of the firmware component ensures the computer must be connected to an authorised network, for example a company's network, failing which the operation of the computer is not permitted.

### Brief Description of the Drawings

Embodiments of the present invention will now be described by way of example only with reference to the accompanying drawings, wherein;
Figure 1 is a diagrammatic illustration of a system comprising a computer embodying the present invention,
Figure 2 is a diagrammatic illustration of the BIOS of the computer of Figure 1, and
Figure 3 is a diagrammatic illustration of a further system embodying the present invention.

### Detailed Description of the Preferred Embodiments

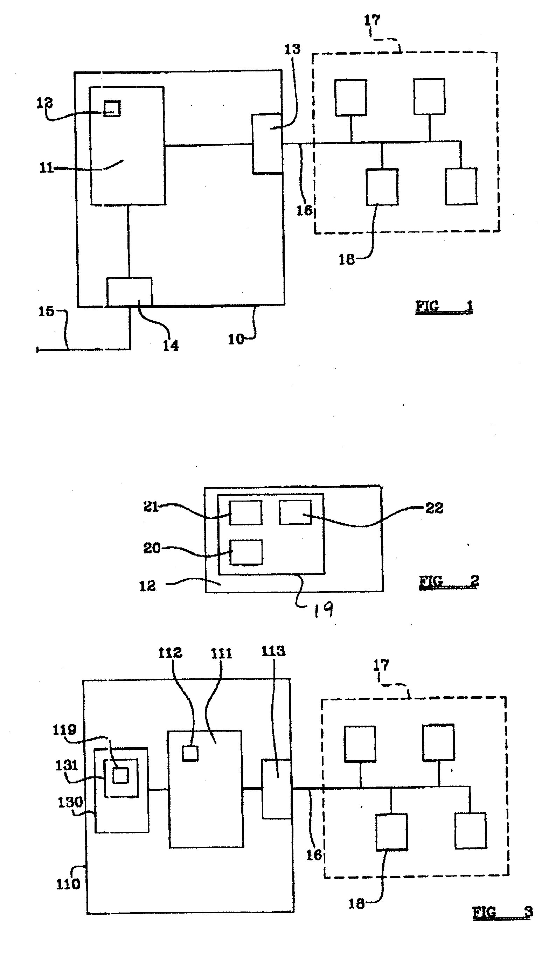

Referring now to Figure 1, a computer embodying the present invention is shown diagrammatically at 10. The computer 10 comprises a motherboard 11 comprising a BIOS 12 in conventional manner. The computer 10 further comprises a network interface card 13 and a power supply unit 14 connected to a power supply 15. The network interface card 13 is connected via a network connection generally illustrated at 16 to a network - diagrammatically illustrated at 17. The network 17 comprises at least one network device 18.

The BIOS ROM 12 is shown in schematic detail in Figure 2. The BIOS 12 is provided with a firmware element 19. The firmware element 19 comprises a random number generator 20, an encryption module 21 and is provided with an encryption key 22. In a preferred embodiment, the encryption key 22 comprises the public key of a public/private key pair associated with the network 17 and stored on the network device 18. The encryption module 21 is operable to encrypt a network enquiry generated by the firmware element 19 using encryption key 22.

The BIOS 12 is operable as follows. On boot, the firmware element 19 performs a handshake operation with the network device 18. In the present example, the random number generator provides a random number with a fair random distribution having a large range of possible values: a 128 bit number for example. The random number acts as a signature code which is encrypted by the encryption module 21 using the public key 22. The encrypted signature code is then transmitted via the network interface, 13 to the network 17 and the network device 18. The network device 18 is operable to decrypt the network enquiry using the private key held on the network device 18. The network 18 then generates a response, in this case comprising the random number and transmits it via the network connection 16 to the computer 10. The firmware element 19 compares the number received in the response with the random number sent in the network enquiry, and if the numbers match, the boot process is allowed to proceed.

A valid response alternatively may not be received from the network device 18, for example if the computer 10 is not connected to an appropriate network, such that no response is received after a pre-set time out period, or the computer, if connected to a network, receives a response which does not encode the random number. In this event, the firmware element 19 acts to prevent the boot process from continuing. If desired, a suitable message may be displayed on a display screen or monitor linked to the computer 10 indicating that the boot process has been stopped because the computer 10 is not connected to the network 17.

Thus, where a computer embodying the present invention is stolen, the computer is rendered unusable because it will not boot in the absence of a connection to the network 17. Even if separate parts of the computer, for example the RAM or the hard disk drive are used separately, the motherboard 11 will not be usable.

The present example may be implemented relatively simply using known techniques. Establishing a network connection during a boot process is known from, for example, the network boot process for a Pre-boot Execution Environment (PXE) - compatible computer in accordance with the Wired For Management ("WfM") specification where the necessary operating software is provided as part of the BIOS.

It will be apparent that any other handshaking or challenge mechanism may be used as desired, by which the network 17 can verify its authenticity in response to an enquiry from the computer 10. The network 17, may, for example provide a response comprising an appropriate identifier and the firmware element 19 may be operable to generate appropriate challenges in the form of enquiry messages as appropriate.

The firmware element 19, although operable on boot of the computer 10, may be operable in other circumstances as desired. For example, where the computer 10 is booting from a "soft-off" operating state, for example from state S5 of the ACPI specification to state S0 the firmware element 19 may be operable not to perform the security check. Instead, the BIOS 12 may be operable in conventional manner to detect when the computer 10 is booting from an unpowered state where the power connection 15 may have been removed and only then will the firmware element 19 perform a security check. In this case, the security check will be performed only when the computer 10 may have been unplugged, indicating that the computer 10 has been potentially removed from its original location. If on performing a security check the firmware element 19 finds that the computer 10 is still connected to the network 17, no further check will be performed until it is detected that the computer has once again been disconnected from the power supply 15. The boot of the computer 10 will thus not in general be slowed down.

It will be recognised that encryption key 22 may be various reasons need to be changed over time. This may be achieved securely in a number of ways, for instance the system may be arranged so that only the BIOS may write the key 22 into the firmware device and the further arranged so that it carries out a network challenge of the above-described type prior to allowing such a change, thereby requiring use of the old public-private key pair in order to implement a new key-pair. Change of the key may be initiated by a software component that is not normally stored on the computer itself, but rather is normally held, for instance, by a company IT department. Equally, update of the key by the BIOS may be arranged to require a specially designed hardware tool or dongle.

Where a peripheral or subsystem of a computer, such as a HDD storage device, is provided with firmware as a controller or otherwise, it will be apparent that the controller may be provided with a firmware element embodying the present invention to perform a security check as described hereinbefore. Such an embodiment will now be described with reference to Figure 3. In Figure 3, the computer is generally indicated at 110 provided with a motherboard 111 and a BIOS 112, and a network interface card 113, in like manner to the computer 10 of Figure 1. The network interface card 113 is connected by a network connection 16 to a network 17 having a network device 18 as shown in figure 1. The computer 110 further comprises a peripheral 130 provided with a controller 131 having a firmware element 119. In the present example, the peripheral 130 is a hard disk drive, but it will be apparent that the peripheral 130 may be any other peripheral or subsystem as desired as appropriate. In this embodiment, the firmware 131 is operable in like manner to the BIOS 12 as shown in Figures 1 and 2 and as discussed hereinbefore, to generate a network enquiry. The network enquiry is passed to the BIOS 112 which transmits the network enquiry via the network interface card 113 to the network 17 and forwards any response from the network device 18 to the firmware 131. The firmware element 119 is operable in like manner to the firmware element 19 to generate the network enquiry, check the response and permit continued operation of the peripheral or prevent operation of the peripheral.

The firmware 119 may be operable to perform a security check at any point as desired. For example, during the boot process, the BIOS 112 hands over control to the firmware of various subsystems of the computer 110, such as a video card and the hard disk drive 130. The security check may be performed at this point. Alternatively, the security check 119 may be performed when the peripheral 130 moves to an operating state from a sleep state, for example from D1 or D3 to D0 in accordance with the ACPI specification. When the computer 10 enters a sleep state, that it undergoes a transition from S0, the BIOS 10 will send instructions to the peripheral 130 and any other peripheral to move to an appropriate sleep state, and will also send instructions to wake when the computer 10 moves to the S0 state. The firmware element 119 may be operable to perform a security check in response to such a transition. If no valid response is received, the firmware 119 may disable the peripheral 130 such that, for example, the hard disk drive 130 will be disabled and will not be readable.

It will be apparent that the embodiments of Figure 1 and Figure 3 may be combined, so that both the BIOS 112 and BIOS 131 perform a security check. It may be envisaged that any other peripherals or subsystems of the computer 10, 110 may be operable in like manner, such that if the computer 10, 110 is stolen, not only will the motherboard 11 not be operable but the peripherals from the computer 10, 110 will also not be separately usable.

By providing a security check as part of a hard disk drive, this will also help reduce the risk of theft where a hard disk drive is removed in an unauthorised fashion and is stored on another computer to attempt to access the data stored on the hard disk drive.

The network 17 in the present examples is preferably a network belonging to a single company or other organisation, and may be a local area network or wide area network as appropriate, with any appropriate network connection and protocol as desired. The network device 18 may be a server or any other device as desired.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A component for a computer, the component comprising a firmware element operable to perform a security check to verify that the computer is connected to an authorised network, the security check comprising the steps of:
generating a network enquiry,
transmitting the network enquiry to a network device via a network, and permitting operation of at least a subsystem of the computer if a response to the network enquiry is received from the network device confirming that the network is an authorised network.

2. A component as claimed in claim 1 wherein the network enquiry is encrypted using a key associated with the network, and wherein the response comprises an indication that the network enquiry has been correctly decrypted.

3. A component as claimed in claim 2 wherein the network enquiry is encrypted using a public key of a public/private key pair associated with the network.

4. A component as claimed in claim 2 or claim 3 wherein the network enquiry comprises a signature code, and wherein the valid response comprises the signature code.

5. A component as claimed in claim 4 wherein the signature code comprises a random number, and wherein the step of generating a network enquiry comprises the step of generating the random number.

6. A component according to any preceding claim wherein the firmware element is operable to perform a security check as part of a boot process.

7. A component according to any preceding claim being a motherboard and wherein the firmware comprises a BIOS.

8. A component according to any one of claims 1 to 7 being a peripheral device and wherein the firmware element comprises a controller for a peripheral.

9. A component as claimed in claim 8 being a mass storage device.

10. A component according to any preceding claim wherein the firmware element is operable to perform a security check in response to a transition to an operating state.

11. A computer comprising a component as claimed in any one of the preceding claims.

12. A network comprising a plurality of computers as claimed in claim 11 and a network device operable to receive a network enquiry from each computer, generate a response accordingly and transmit the response to the computer.

13. A method of booting a computer comprising a firmware element performing a security check to verify that the computer is connected to an authorised network, the security check comprising the steps of:
generating a network enquiry,
transmitting the network enquiry to a network device via a network, and permitting operation of at least a subsystem of the computer if a response to the network enquiry is received from the network device confirming that the network is an authorised network.

14. A method as claimed in claim 13 comprising encrypting the network enquiry using a key associated with the network, receiving an associated response and verifying that the response comprises an indication that the network enquiry has been correctly decrypted.
